# EUROPEAN PATENT APPLICATION

(11) **EP 1 419 953 A1**
(43) Date of publication of application: **19.05.2004**
(21) Application number: 03023956.0
(22) Date of filing: 22.10.2003
(51) Int. Cl.: B62D 25/08, B62D 25/04, B62D 25/06, B62D 23/00

(54) **Rear vehicle body structure**

(30) Priority: 24.10.2002 JP 2002309403
(71) Applicant: FUJI JUKOGYO KABUSHIKI KAISHA, Tokyo-To (JP)
(72) Inventor: Igarashi, Masanori, Shinjuku-ku Tokyo (JP); Nomura, Akira, Shinjuku-ku Tokyo (JP)
(74) Representative: Sajda, Wolf E., Dipl.-Phys.

(57) **Abstract**

A rear vehicle body structure has rear side frames (3) extending longitudinally, C and D pillars (12,14) extending substantially vertically, a first cross member (21) connecting at a front end thereof to one of the rear side frames in the vicinity of one of the C pillars (12) for shifting to a rear of the body as separating from the one of the rear side frames (3) and then connecting at a rear end thereof to the other rear side frame, and a second cross member (22) connecting at a front end thereof to the other rear side frame (3) in the vicinity of the other C pillar (21) for shifting to the rear of the body as separating from the other rear side frame to cross the first cross member (20) and then connecting at a rear end thereof to the one of the rear side frame.

## Description

### BACKGROUND OF THE INVENTION

### 1. Field of the Invention

The present invention relates to a vehicle body structure, and more particularly to a rear body structure.

### 2. Description of the Related Art

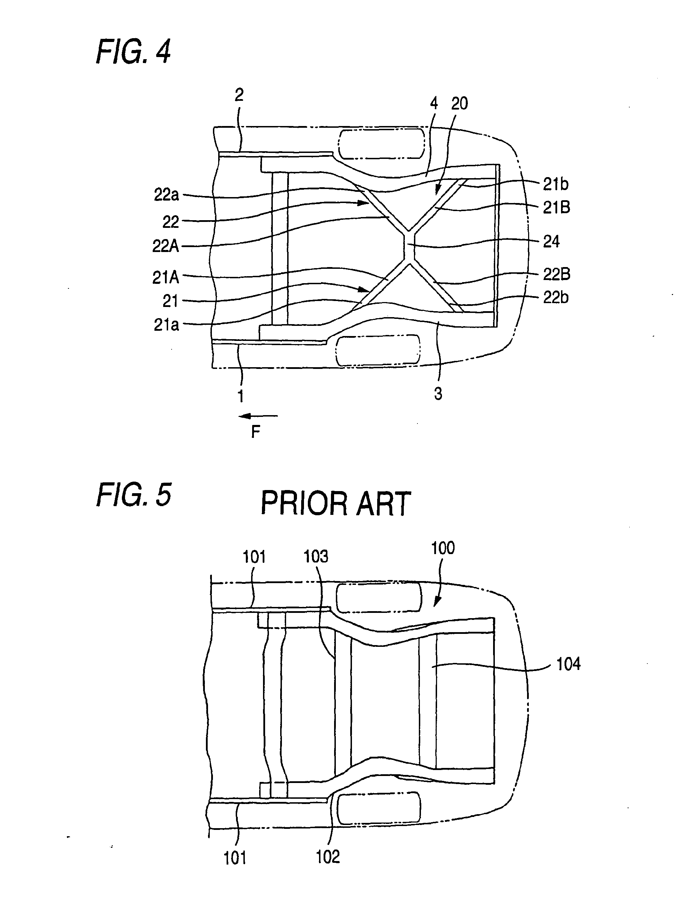

In a lower body structure at a rear part of a vehicle body, for example, as shown in Fig. 5 showing a plan view of a main part of the structure, left and right rear side frames 102 which extend longitudinally are disposed in such a way that front portions of the rear side frames are connectedrespectively to rear portions of left and right side sills 101 which extend longitudinally along left and right sides of the vehicle body, and a front cross member 103 and a rear cross member 104 which both extend transversely are provided to span between the left and right rear side frames 102 to thereby form substantially a ladder-like frame 100.

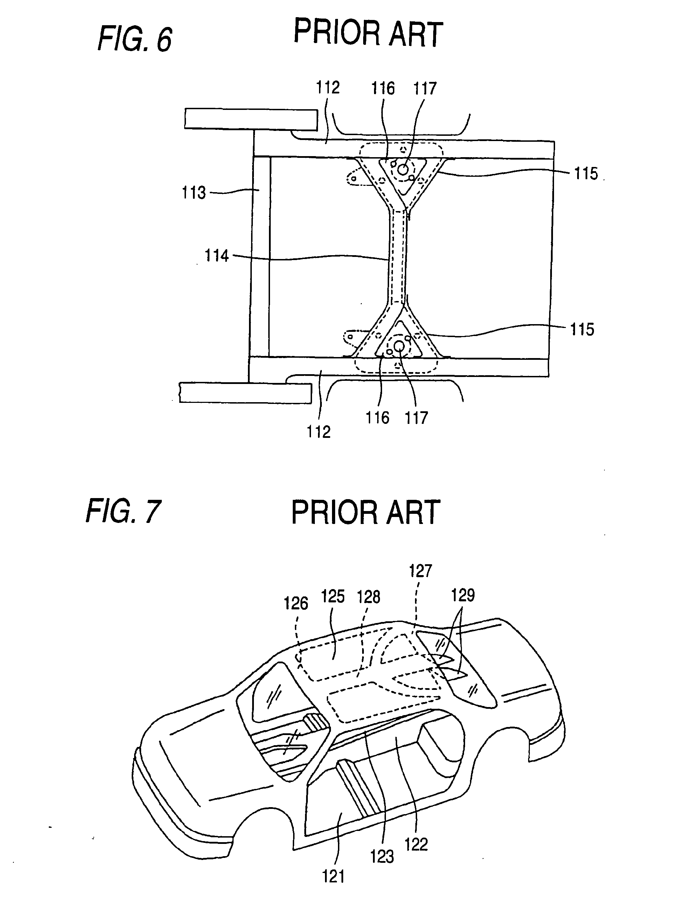

In addition, as shown in Fig. 6 which shows the plan view illustrating a main part thereof, there is proposed another rear body structure (for example, refer to JP-A-8-142909) in which a front cross member 113 and a rear cross member 114 are provided to span between left and right rear side frames 112 at a front end and an intermediate position therealong, portions of the rear cross member 114 which are located in the vicinity of end portions thereof and the rear side frames 112 are connected together by auxiliary members 115, respectively, a bracket 116 is mounted in an area surrounded by the rear side frame 112, the rear cross member 114 and the auxiliary member 15, and a shock absorber 117 of a rear suspension is mounted on the bracket 116.

In addition, as shown in Fig. 7 which shows a perspective view illustrating a main part thereof, there is provided a further structure (for example, refer to JP-2001-180533), while a floor frame 123 which extends longitudinally and constitutes a closed cross section is provided along a tunnel portion 122 formed at a central portion of a floor panel 121, a roof frame 128 which spans between a front rail portion 126 and a rear rail portion 127 and constitutes a closed cross section is provided at a central portion on an underside of a roof panel 125, the floor frame 123 and the roof frame 128 being connected together at rear ends thereof by gusset members 129.

According to the lower body structure shown in Fig. 5, since both the front cross member 103 and the rear cross member 104 are disposed to extend transversely and span between the left and right rear side frames 102, there may be caused a risk that a sufficient body rigidity cannot be obtained, and hence a relative deformation is generated between the left and right rear side frames 102 due to vibrations and distortion of the body which occur while the vehicle is running, thereby causing a deterioration of the controllability and running stability of the vehicle.

In addition, in the event that an impact load is inputted to one of the rear side frame 102 from one side, there may be causes the risk that the impact load so inputted cannot be transmitted effectively to the other rear side frame 102 and hence cannot be dispersed and transmitted efficiently to the whole vehicle body. In addition, in the event that the impact load is inputted similarly from the rear, the impact load so inputted cannot be dispersed and transmitted effectively to the entirety of the vehicle body.

On the other hand, also in the rear body structure shown in Fig. 6, as with the body structure shown in Fig. 5, there may be caused a risk that a sufficient body rigidity cannot be obtained, and hence a relative deformation is generated between the left and right rear side frames 112 due to vibrations and distortion of the body which occur while the vehicle is running, thereby causing the deterioration of the controllability and the running stability of the vehicle.

In addition, according to the body structure shown in Fig. 7, a lower part and an upper part of the vehicle body are associated with each other by connecting the floor frame 123 and the roof frame 128 with the gusset members 129 to thereby improve the body rigidity.

Since the floor frame 123 and the roof frame 128 are connected with the gusset members 129, however, the number of constituent components involved is increased and the structure becomes complex, and there may be caused the risk that the rear visibility is affected. In addition, while the rigidity of the tunnel portion 122 and the central portion of the roof can be improved by the floor frame 123 and the roof frame 128, in the event that the impact load is inputted from the side and rear of the vehicle, there may be caused the risk that the impact load so inputted cannot be dispersed effectively to the entirety of the vehicle body.

### SUMMARY OF THE INVENTION

Thus, an object of the present invention, which was made in view of these situations, is to provide a rear vehicle body structure which can effectively disperse an impact load to an entirety of the vehicle body in case such an impact load is applied thereto from the side and rear of the vehicle body and which can secure a superior body rigidity.

With a view to attaining the object, according to a first aspect of the present invention, there is provided a rear vehicle body structure, having left and right rear side frames extending longitudinally, left and right C and D pillars extending substantially vertically, and a cross member provided to span between the left and right rear side frames, being a substantially X-shaped cross member, as viewed from the top, and having, a first cross member connecting at a front end thereof to one of the rear side frames in the vicinity of one of the C pillars, shifting to a rear of the body as separating from the one of the rear side frames and then connecting at a rear end thereof to the other rear side frame, and a second cross member connecting at a front end thereof to the other rear side frame in the vicinity of the other C pillar, shifting to the rear of the body as separating from the other rear side frame to cross the first cross member and then connecting at a rear end thereof to the one of the rear side frame.

According to the first aspect of the present invention, the substantially X-shaped cross member having the first cross member and the second cross member which each looks like a brace and cross each other is disposed between the left and right rear side frames in such a manner that the front ends of the respective cross members connect to the respective rear side frames in the vicinity of the respective C pillars, whereby the relative deformation between the left and right rear side frames is suppressed so as to obtain the rigidity at the lower part of the vehicle body, and a connecting rigidity between the lower part of the vehicle body where the rigidity is so obtained and the C pillars can be secured, thereby making it possible to improve the body rigidity remarkably.

In addition, even in the event that an impact load is applied from the side or rear of the vehicle body, the impact load so applied can be dispersed and transmitted efficiently from one of the rear side frames via the X-shaped cross member to the other rear side frame, so that the impact load so dispersed and transmitted can not only be dispersed to the entirety of the lower part of the vehicle body but also can be dispersed and transmitted effectively to the C pillars, whereby the impact load can then be dispersed from the C pillars to the side and upper parts of the vehicle body, thus making it possible to efficiently disperse the impact load so applied to the entirety of the vehicle body.

According to a second aspect of the present invention, there is provided a rear vehicle body structure as set forth in the first aspect of the present invention, wherein the rear end of the second cross member connects to the one of the rear side frames in the vicinity of one of the D pillars, and wherein the rear end of the first cross member connects to the other rear side frame in the vicinity of the other D pillar.

According to the second aspect of the present invention, the connecting rigidity between the lower part of the vehicle body where the rigidity is secured further and the D pillars can be secured to further improve the body rigidity. Moreover, even in the event that the impact load is applied from the side or rear of the vehicle body, the impact load so applied can be dispersed and transmitted to the side and upper parts of the vehicle body via the D pillars as well as via the impact load dispersion and a transmission path secured according to the first aspect of the present invention, thus making it possible to efficiently disperse the impact load so applied to the entirety of the vehicle body.

According to a third aspect of the present invention, there is provide the rear vehicle body structure having, left and right rear side frames extending longitudinally, left and right C and D pillars extending substantially vertically, and, a cross member provided to span between the left and right rear side frames, the cross member being a substantially X-shaped cross member, as viewed from the top, and having, a first cross member connecting at a front end thereof to one of the rear side frames, shifting to a rear of the body as separating from the one of the rear side frames and then connecting at a rear end thereof to the other rear side frame in the vicinity of the D pillar, and a second cross member connecting at a front end thereof to the other rear side frame, shifting to the rear of the body as separating from the other rear side frame to cross the first cross member and then connecting at a rear end thereof to the one of the rear side frame in the vicinity of the D pillar.

According to the third aspect of the present invention, the substantially X-shaped cross member having the first cross member and the second cross member which cross each other in a brace-like configuration is disposed between the left and right rear side frames, whereby the relative deformationbetween the left and right rear side frames is suppressed so as to obtain rigidity at the lower part of the vehicle body, and the connecting rigidity between the lower part of the vehicle body where the rigidity is so obtained and the D pillars can be secured, thereby making it possible to improve the body rigidity remarkably.

In addition, even in the event that the impact load is applied from the side or rear of the vehicle body, the impact load so applied can be dispersed and transmitted efficiently from one of the rear side frames via the X-shaped cross member to the other rear side frame, so that the impact load so dispersed and transmitted not only can be dispersed to the entirety of the lower part of the vehicle body via the left and right rear side frames and the cross member but also can be dispersed effectively to the D pillars, whereby the impact load can then be dispersed and transmitted from the D pillars to the side and upper parts of the vehicle body, thus making it possible to efficiently disperse the impact load so applied to the entirety of the vehicle body.

According to a fourth aspect of the present invention, there is provided a rear vehicle body structure having: left and right side rails extending longitudinally, left and right C and D pillars extending substantially vertically, and, a roof brace provided to span between the left and right side rails, the roof brace being a substantially X-shaped roof brace, as viewed from the top, and having: a first roof brace connecting at a front end thereof to one of the side rails in the vicinity of one of the C pillars, shifting to a rear of the body as separating from the one of the side rails and then connecting at a rear end thereof to the other side rail, and a second roof brace connecting at a front end thereof to the other side rail in the vicinity of the other C pillar, shifting to the rear of the body as separating from the other side rail to cross the first roof brace and then connecting at a rear end thereof to the one of the side rails.

According to the fourth aspect of the present invention, the substantially X-shaped roof brace having the first roof brace and the second roof brace which connect at the respective front ends to the respective side rails in the vicinity of the respective C pillars and cross each other in a brace-like configuration is disposed between the left and right side rails, whereby the relative deformation between the left and right side rails is suppressed so as to obtain the rigidity at the upper part of the vehicle body which functions as an indispensable reinforcement member in securing body rigidity, and the connecting rigidity between the upper part of the vehicle body where the rigidity is so obtained and the C pillars can be secured, thereby making it possible to improve the body rigidity remarkably.

In addition, even in the event that the impact load is applied from the side or rear of the vehicle body, the impact load so applied can be absorbed by dispersing the impact load efficiently from the lower part of the vehicle body via the C pillars to a wide range over the upper part of the vehicle body.

According to a fifth aspect of the present invention, there is provided a rear vehicle body structure as set forth in the fourth aspect of the present invention, wherein the rear end of the second roof brace connects to the one of the side rails in the vicinity of one of the D pillars, and wherein the rear end of the first roof brace connects to the other side rail in the vicinity of the other D pillar.

According to the fifth aspect of the present invention, the connecting rigidity between the upper part of the vehicle body where the rigidity is secured further and the D pillars can be secured to further improve the body rigidity. Moreover, even in the event that the impact load is applied from the side or rear of the vehicle body, the impact load so applied can be dispersed and transmitted from the lower part of the vehicle body via the D pillars to the entirety of the upper part of the vehicle body as well as via the impact load dispersion and transmission path secured by the fourth aspect of the present invention, thus making it possible to efficiently disperse the impact load so applied to the entirety of the vehicle body.

According to a sixth aspect of the present invention, there is provided the rear vehicle body structure having, left and right side rails extending longitudinally, left and right C and D pillars extending substantially vertically, and a roof brace provided to span between the left and right side rails, the roof brace being a substantially X-shaped roof brace, as viewed from the top, and having: a first roof brace connecting at a front end thereof to one of the side rails, shifting to a rear of the body as separating from the one of the side rails and then connecting at a rear end thereof to the other side rail in the vicinity of the D pillar, and a second roof brace connecting at a front end thereof to the other side rail, shifting to the rear of the body as separating from the other side rail to cross the first cross member and then connecting at a rear end thereof to the one of the side rails in the vicinity of the D pillar.

According to the sixth aspect of the present invention, the substantially X-shaped roof brace having the first roof brace and the second roof brace which cross each other is disposed between the left and right side rails, whereby the relative deformation between the left and right side rails is suppressed so as to obtain the rigidity at the upper part of the vehicle body which functions as an indispensable reinforcement member in securing the body rigidity, and the connecting rigidity between the upper part of the vehicle body where the rigidity is so obtained and the D pillars can be secured, thereby making it possible to improve the body rigidity remarkably. In addition, even in the event that the impact load is applied from the side or rear of the vehicle body, the impact load so appliedcanbe absorbedbydispersingthe impact loadefficiently from the lower part of the vehicle body via the D pillars to a wide range over the upper part of the vehicle body.

According to a seventh aspect of the present invention, there is provided the rear vehicle body structure as set forth in the first aspect of the present invention, further having a substantially X-shaped roof brace, as viewed from the top, the substantially X-shaped roof brace having: a first roof brace connecting at a front end thereof to one of the side rails in the vicinity of one of the C pillars, shifting to a rear of the body as separating from the one of the side rails and then connecting at a rear end thereof to the other side rail, and a second roof brace connecting at a front end thereof to the other side rail in the vicinity of the other C pillar, shifting to the rear of the body as separating from the other side rail to cross the first roof brace and then connecting at a rear end thereof to the one of the side rails.

According to the seventh aspect of the present invention, in addition to the first aspect of the present invention, the substantially X-shaped roof brace having the first roof brace and the second roof brace which connect at the respective front ends to the respective side rails in the vicinity of the respective C pillars and cross each other is disposed between the left and right side rails, whereby the relative deformation between the left and right side rails is suppressed so as to obtain the rigidity at the upper part of the vehicle body, and the connecting rigidity between the upper part of the vehicle body where the rigidity is so obtained and the C pillars can be secured, thereby making it possible to improve the body rigidity remarkably.

In addition, even in the event that the impact load is applied from the side or rear of the vehicle body, the impact load so applied can be absorbed by dispersing thereof efficiently from the lower part of the vehicle body via the C pillars to a wide range over the upper part of the vehicle body where the rigidity is so secured, therebymaking it possible to disperse the impact load over the whole of the vehicle body.

According to an eighth aspect of the present invention, there is provided the rear vehicle body structure as set forth in the third aspect of the present invention, further having a substantially X-shaped roof brace, as viewed from the top, the substantially X-shaped roof brace having: a first roof brace connecting at a front end thereof to one of the side rails, shifting to a rear of the body as separating from the one of the side rails and then connecting at a rear end thereof to the other side rail in the vicinity of the D pillar, and a second roof brace connecting at a front end thereof to the other side rail, shifting to the rear of the body as separating from the other side rail to cross the first cross member and then connecting at the rear end thereof to the one of the side rails in the vicinity of the D pillar.

According to the eighth aspect of the present invention, in addition to the third aspect of the present invention, the substantially X-shaped roof brace having the first roof brace and the second roof brace which connect at the respective front ends to the respective side rails in the vicinity of the respective D pillars and cross each other is disposed between the left and right side rails, whereby the relative deformation between the left and right side rails is suppressed so as to obtain the rigidity at the upper part of the vehicle body, and the connecting rigidity between the upper part of the vehicle body where the rigidity is so obtained and the D pillars can be secured, thereby making it possible to improve the body rigidity remarkably.

In addition, even in the event that the impact load is applied from the side or rear of the vehicle body, the impact load so applied can be absorbed by dispersing the impact load efficiently from the lower part of the vehicle body via the D pillars to a wide range over the upper part of the vehicle body where the rigidity is so secured, thereby making it possible to disperse the impact load over the whole of the vehicle body.

- According to a ninth aspect of the present invention, there is provided the rear vehicle body structure as set forth in the second aspect of the present invention, further having a substantially X-shaped roof brace, as viewed from the top, the substantially X-shaped roof brace having: a first roof brace connecting at a front end thereof to one of the side rails in the vicinity of one of the C pillars, shifting to a rear of the body as separating from the one of the side rails and then connecting at a rear end thereof to the other side rail in the vicinity of the D pillar, and a second roof brace connecting at a front end thereof to the other side rail, shifting to the rear of the body as separating from the other side rail to cross the first cross member and then connecting at a rear end thereof to the one of the side rails in the vicinity of the D pillar.

According to the ninth aspect of the present invention, in addition to the second aspect of the present invention, the substantially X-shaped roof brace having the first roof brace and the second roof brace which connect at the respective front ends to the respective side rails in the vicinity of the respective C pillars and connect at the respective rear ends to the respective side rails in the vicinity of the respective D pillars and which cross each other is disposed between the left and right side rails, whereby the relative deformation between the left and right side rails is suppressed so as to obtain rigidity at the upper part of the vehicle body, and the connecting rigidity between the upper part of the vehicle body where the rigidity is so obtained and the C and D pillars can be secured, thereby making it possible to improve the body rigidity remarkably.

In addition, even in the event that the impact load is applied from the side or rear of the vehicle body, the impact load so applied can be absorbed by dispersing the impact load efficiently from the lower part of the vehicle body via the C and D pillars to the wide range over the upper part of the vehicle body where the rigidity is so secured, thereby making it possible to disperse the impact load over the whole of the vehicle body.

According to a tenth aspect of the present invention, there is provided the rear vehicle body structure having: left and right rear side frames extending longitudinally, and a cross member provided to span between the left and right rear side frames, the cross member being the substantially X-shaped cross member, as viewed from the top, and having: a first cross member connecting at a front end thereof to one of the rear side frames, shifting to the rear of the body as separating from the one of the rear side frames and then connecting at the rear end thereof to the other rear side frame, and a second cross member connecting at the front end thereof to the other rear side frame, shifting to the rear of the body as separating from the other rear side frame to cross the first cross member and then connecting at a rear end thereof to the one of the rear side frame.

According to the tenth aspect of the present invention, the substantially X-shaped cross member having the first cross member and the second cross member which each looks like a brace and which cross each other is disposed between the left and right rear side frames in such a manner as to connect thereto, whereby the relative deformation between the left and right rear side frames is suppressed so as to obtain the rigidity at the lower part of the vehicle body. In addition, even in the event that the impact load is applied from the side or rear of the vehicle body, the impact load so applied can be dispersed and transmitted efficiently from one of the rear side frames via the X-shaped cross member to the other rear side frame, thereby making it possible to efficiently disperse the impact load over the entirety of the vehicle body.

According to an eleventh aspect of the present invention, there is provided the rear vehicle body structure having: left and right side rails extending longitudinally, and a roof brace provided to span between the left and right side rails, the roof brace being a substantially X-shaped roof brace, as viewed from the top, and having: a first roof brace connecting at a front end thereof to one of the side rails, shifting to a rear of the body as separating from the one of the side rails and then connecting at a rear end thereof to the other side rail, and a second roof brace connecting at a front end thereof to the other side rail, shifting to the rear of the body as separating from the other side rail to cross the first roof brace and then connecting at a rear end thereof to the one of the side rails.

According to the eleventh aspect of the present invention, the substantially X-shaped roof brace having the first roof brace and the second roof brace which each looks like a brace and cross each other is disposed between the left and right side rails, whereby the relative deformation between the left and right side rails is suppressed so as to obtain the rigidity at the upper part of the vehicle body which functions as an indispensable reinforcement member in securing the body rigidity, and even in the event that the impact load is applied from the side or rear of the vehicle body, the impact load so applied can be absorbedby dispersing the impact loadefficiently to the wide range over the upper part of the vehicle body.

### BRIEF DESCRIPTION OF THE DRAWINGS

Fig. 1 is a perspective view of a rear part of a vehicle body which illustrates schematically an overall embodiment of a rear vehicle body structure according to the present invention;
Fig. 2 is a plan view illustrating a main part of a lower part of the vehicle body shown in Fig. 1;
Fig. 3 is a cross-sectional view taken along the line I-I in Fig. 1;
Fig. 4 is an explanatory view of another embodiment of the present invention;
Fig. 5 is the plan view illustrating the main part of a conventional rear body structure;
Fig. 6 is the plan view illustrating the main part of another conventional rear body structure; and
Fig. 7 is the perspective view illustrating schematically the main part of a further conventional body structure.

### DETAILED DESCRIPTION OF THE PREFERRED EMBODIMENTS

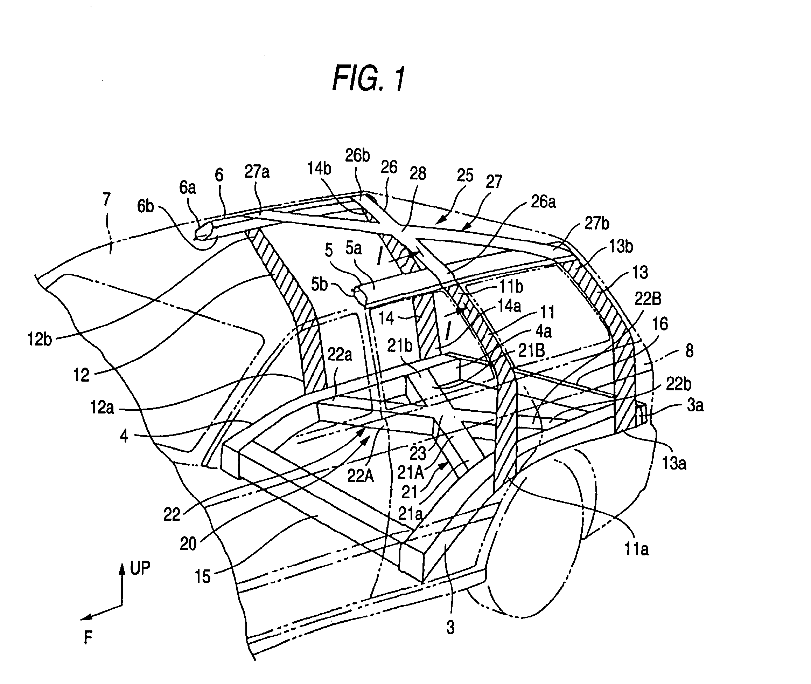

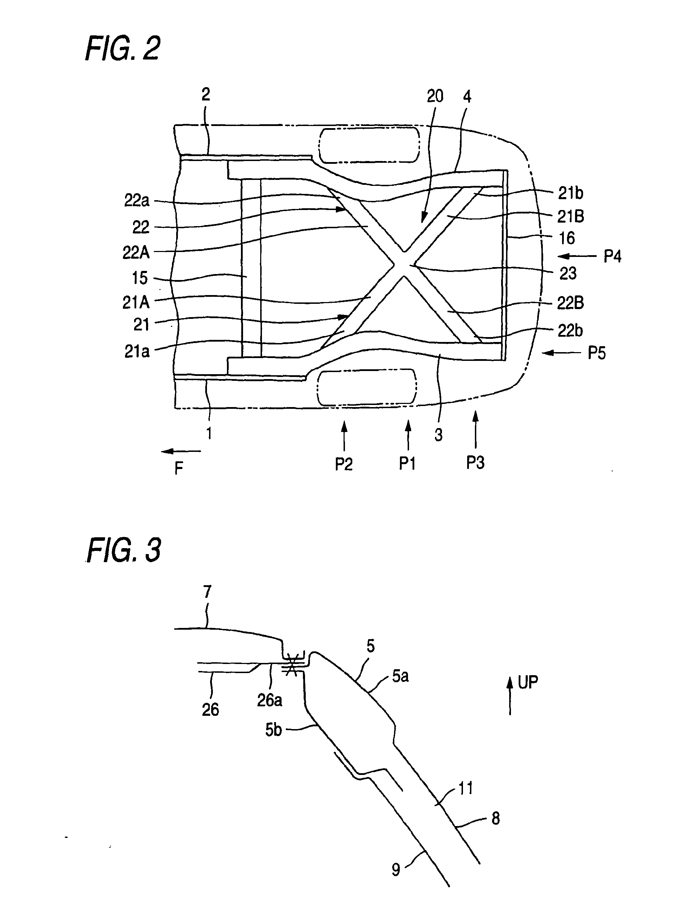

Embodiments of rear vehicle body structures according to the present invention will be described below by reference to Figs. 1 to 4. Fig. 1 is a perspective view showing a rear body structure illustrating schematically an entirety of one of the embodiments of the present invention, Fig. 2 is a plan view illustrating a lower part of the vehicle body, and Fig. 3 is a cross-sectional view taken along the line I-I in Fig. 1. Note that in the drawings, an arrow line F indicates a running direction of a vehicle, and an arrow line UP indicates a upper direction of the vehicle.

The vehicle to which the embodiment of the present invention is applied is, for example, a so-called station wagon or on estate type vehicle in which a luggage compartment is integrally formed at a rear part of a passenger compartment thereof, and according to a lower body structure at the rear part-of a vehicle body, as shown in Figs. 1 and 2, front portions of left and right rear side frames 3, 4 each having a hollow closed cross-sectional shape which extend longitudinally are connected, respectively, to rear portions of side sills 1, 2 which extend along left and right sides of the vehicle body in a face-to-face manner.

On the other hand, as shown in Figs. 1 and 3, at an upper portion of a rear part of the vehicle body, side rails 5 and 6 extend longitudinally along underside edges of a roof panel 7. The respective side rails 5, 6 are formed into a hollow closed cross-sectional shape which extends longitudinally along the vehicle body by outer panels 5a, 6a and inner panels 5b, 6b which confront each other.

C pillars 11, 12 each having a hollow closed cross-sectional shape which extend vertically along rear door openings and D pillars 13, 14 each having a hollow closed cross-sectional shape which extend vertically along a rear end portion of the vehicle body are formed by outer side panels 8 and rear quarter panel inners 9, respectively, on left and right sides of the vehicle body. (In Fig. 1, the C pillars 11, 12 and the D pillars 13, 14 are hatched.) Lower ends 11a and 12a of the C pillars 11, 12 are connected, respectively, to the rear side frames 3, 4 directly or via a floor and a reinforcement (not shown), and lower ends 13a and 14a of the D pillars 13, 14 are connected, respectively, to portions of the rear side frames 3, 4 which are in the vicinity of rear ends 3a, 4a thereof directly or via the floor and a reinforcement (not shown).

On the other hand, portions of the respective outer panels 8 which constitute upper ends 11b, 12b, 13b, 14b of the C pillars 11, 12 and the D pillars 13, 14 are formed integrally and continuously with the outer panels 5a, 6a of the side rails 5, 6.

The left and right rear side frames 3, 4 are connected to each other at substantially front ends thereof by a cross member 15 which extends transversely and at rear ends thereof by a rear skirt 16 and a bumper beam which both extend transversely.

Furthermore, a first cross member 21 is provided to span between the left and right rear side frames 3 and 4 in a brace-like configuration which first cross member 21 connects at a front end 21a thereof to one of the rear side frames, which is the rear side fame 3, continues to extend linearly to gradually approach the rear of the vehicle body as the front end 21a comes from the rear side frame 3 toward the other rear side frame 4 and connects at a rear end 21b thereof to the rear side frame 4 in the vicinity of the lower end 14a of the D pillar 14. This first cross member 21 connects to the C pillar 11 and the D pillar 14 so that a load can be transmitted to the C pillar 11 through the front end 21a and to the D pillar 14 through the rear end 21b.

In addition, a linear second cross member 22 is also provided to span in a brace-like configuration which a second cross member 22 connects at a front end 22a thereof to the rear side frame 4 in the vicinity of the lower end 12a of the C pillar 12, connects at a rear end 22b thereof to the rear side frame 3 in the vicinity of the lower end 13a of the D pillar 13 and crosses the first cross member 21 at a central portion in a widthwise direction of the vehicle, and connects to the first cross member 21 at a crossing portion 23. The second cross member 22 connects to the C pillar 12 and the D pillar 13 so that the load can be transmitted to the C pillar at the rear end 22b and to the D pillar 13 through the rear end 22b thereof.

In other words, a front portion range 21A and a rear portion range 21B of the first cross member 21 and a front portion range 22A and a rear portion range 22B of the second cross member 22 are connected to one another at the crossing portion 23 so as to form a substantially X-shaped cross member 20 as viewed from the top, whereby a rigidity at the lower part of the vehicle body can be secured when the cross member 20 is connected to the rear side frames 3 and 4.

As shown in Figs. 1 and 3, a first roof brace 26 and a second roof brace 27 are provided to span between the left and right side rails 5 and 6. The first roof brace 26 connects at a front end 26a thereof to an end portion of the roof panel 7 in the vicinity of the upper end 11b of the C pillar 11 together with the outer panel 5a and the inner panel 5b of the side rail 5. The first roof brace 26 continues to extend linearly to gradually approach the rear of the vehicle body as moving from the side rail 5 toward the side rail 6 along the underside of the roof panel 7. The first roof brace 26 connects at a rear end 26b thereof to the end portion of the roof panel 7 in the vicinity of the upper end 14b of the D pillar 14 together with the outer panel 6a and the inner panel 6b of the side rail 6. On the other hand, the second roof brace 27 connects at a front end 27a thereof to the end portion of the roof panel 7 in the vicinity of the upper end 12b of the C pillar 12 together with the outer panel 6a and the inner panel 6b of the side rail 6. the second roof brace 27 continues to extend linearly to gradually approach the rear of the vehicle body as moving from the side rail 6 toward the side rail 5 along the underside of the roof panel 7 so as to cross and connect to the first roof brace 26 at a central in a widthwise direction of the vehicle. The second roof brace 27 extends further from this crossing portion 28 to connect at a rear end 27b thereof to the end portion of the roof panel 7 in the vicinity of the upper end 13b of the D pillar 13 together with the outer panel 5a and the inner panel 5b of the side rail 5.

In other words, the substantially X-shaped roof brace 25 as viewed from the top is formed between the side rails 5 and 6 by the first roof brace 26 and the second roof brace 27 so as to secure the rigidity at the upper part of the vehicle body which functions as an important reinforcement in securing the body rigidity. In addition, the upper part of the vehicle body where the rigidity is so secured can secure a connecting rigidity between the C pillars 11, 12 and the D pillars 13, 14.

Next, the function of the rear body structure structured as has been described heretofore will be described by reference mainly to Fig. 1.

Since the substantiallyX-shapedcrossmember 20 as viewed from the top which includes the first cross member 21 and the second cross member 22 is disposed between the left and right rear side frames 3, 4 in such a manner that the first and second cross members 21, 22 connect to the rear side frames 3 and 4 in the vicinity of the lower ends 11a, 12a of the C pillars 11 and 12, respectively, as well as in the vicinity of the lower ends 13a, 14a of the D pillars 13 and 14, respectively, when a twisted deformation is generated in the vehicle body due to a load and vibrations which are inputted to the vehicle body while the vehicle is running, a tensile or compression force is applied to the first cross member 21 and the second cross member 22 which are disposed in a brace-like configuration, and the relative deformation between the left and right rear side frames 3 and 4 is suppressed by a reaction force which resists the tensile or compression force so applied to thereby obtain the rigidity at the lower part of the vehicle body. In addition, since the first and second cross members 21, 22 connect to the rear side frames 3 and 4 in the vicinity of the lower ends 11a, 12a of the C pillars 11 and 12, respectively, as well as in the vicinity of the lower ends 13a, 14a of the D pillars 13, 14, respectively, connecting rigidity is obtained between the lower part of the vehicle body and the C pillars 11, 12 and the D pillars 13, 14.

On the other hand, since the substantially X-shaped roof brace 25 as viewed from the top is disposed between the side rails 5 and 6 in such a manner as to connect to the side rails 5, 6 in the vicinity of the upper ends 11b, 12b of the C pillars 11, 12, respectively, as well as in the vicinity of the upper ends 13b, 14b of the D pillars 13, 14, respectively, similarly, when a twisted deformation is generated in the vehicle body due to a load and vibrations which are inputted to the vehicle body while the vehicle is running, the tensile or compression force is applied to the first roof brace 26 and the second roof brace 27 which are disposed in a brace-like configuration, and the relative deformation between the left and right side rails 5 and 6 is suppressed by the reaction force which resists the tensile or compression force so applied to thereby obtain the rigidity at the upper part of the vehicle body. In addition, since the first and second roof braces 26, 27 connect to the side rails 5, 6 in the vicinity of the upper ends 11b, 12b of the C pillars 11 and 12, respectively, as well as in the vicinity of the upper ends 13b, 14b of the D pillars 13, 14, respectively, connecting rigidity is obtained between the upper part of the vehicle body and the C pillars 11, 12 and the D pillars 13, 14. Consequently, the lower and upper parts of the vehicle body where the rigidity is so secured are connected together with the sufficient connecting rigidity by the C pillars 11, 12 and the D pillars 13, 14, whereby the rigidity at the rear part of the vehicle body is improved, and leads to a remarkable improvement in the rigidity of the whole vehicle body.

In addition, in the event that an impact load is inputted from a side of the vehicle body, for example, as shown in Fig. 2, in the event that an impact load P1 is inputted to the whole side of the rear part of the vehicle body or between the C pillar 11 and the D pillar 13, the impact load P1 is dispersed and transmitted to the entirety of the lower part of the vehicle body such as the floor panel over a wide range extending from the front to rear of the vehicle body by the rear side frame 3. A part of the impact load P1 is also dispersed and transmitted to the front end 21a of the first cross member 21 and the lower end 11a of the C pillar 11, as well as to the rear end 22b of the second cross member 22 and the lower end 13a of the D pillar 13 via the rear side frame 3.

The impact load which is dispersed and inputted to the front end 21a of the first cross member 21 is transmitted from the rear end 21b thereof via the first cross member 21 to the vicinity of a rear end 4a of the other rear side frame 4, and part of the impact load so transmitted is dispersed from the crossing portion 23 to the front portion range 22A of the second cross member 22 and is then transmitted from the front portion 22a to the rear side frame 4 in the vicinity of the lower end 12a of the C pillar 12, whereby the impact load so transmitted is dispersed and transmitted over the wide range of the rear side frame 4. In addition, the part of the impact load so transmitted is then dispersed and transmitted from the rear side frame 4 to the C pillar 12 and the D pillar 14, is then dispersed from the C pillar 12 and the D pillar 14 to the side of the vehicle body and is also transmitted to the side rail 6, whereby the impact load so transmitted is dispersed from the side rail 6, and the first roof brace 26 and the second roof brace 27 to the upper part of the vehicle body such as the roof panel so as to be absorbed thereby.

On the other hand, the impact load inputted to the vicinity of the rear end 22a of the second cross member 22 is transmitted from the second cross member 22 via the front end 22a thereof to the other rear side frame 4 in the vicinity of the lower end 12a of the C pillar, and the part of the impact load so transmitted is dispersed from the crossing portion 23 to the rear portion range 21B of the first cross member 21 and is then transmitted from the rear portion 21b to the vicinity of the rear end 4a of the rear side frame 4 to thereby be transmitted over the wide range of the rear side frame 4. In addition, the part of the impact load so transmitted is dispersed from the rear side frame 4 to the C pillar 12 and the D pillar 14 to thereby be dispersed to the side of the vehicle body, as well as being transmitted to the side rail 6, whereby the impact load so transmitted is then dispersed from the side rail 6, and the first roof brace 26 and the second roof brace 27 to the entirety of the upper part of the vehicle body such as the roof panel.

Consequently, the impact load P1 is dispersed from the left and right rear side frames 3, 4 and the first cross member 21 and the second cross member 22 to the entirety of the lower part of the vehicle body such as the floor panel, from the C pillar 11 and the D pillar 13 to the side of the vehicle body such as the outer side panel 8 and the rear quarter panel inner 9, and from the left and right side rails 5, 6 and the first roof brace 26 and the second roof brace 27 to the entirety of the upper part of the vehicle body such as the roof panel. Thus, the impact load P1 is dispersed efficiently over the entirety of the vehicle body so as to be absorbed therein.

In the event that an impact load P2 is inputted from the side of the vehicle body to or a front portion of the C pillar 11, the impact load P2 so inputted is dispersed and transmitted over a wide range of the rear side frame 3 in the longitudinal direction and is dispersed and transmitted mainly to the front end 21a of the first cross member 21 and the lower end 11a of the C pillar via the rear side frame 3.

The impact load which is inputted to the front end 21a of the first cross member 21 is transmitted from the rear end 21b thereof via the first cross member 21 to the vicinity of the lower end 14a of the D pillar 14, and the part of the impact load so transmitted is dispersed from the crossing portion 23 to the front portion range 22A of the second cross member 22 and is then transmitted from the front portion 22a to the rear side frame 4 in the vicinity of the lower end 12a of the C pillar 12, whereby the impact load so transmitted is dispersed and transmitted over the wide range of the rear side frame 4. In addition, the part of the impact load so transmitted is then dispersed and transmitted from the rear side frame 4 to the C pillar 12 and the D pillar 14, is then dispersed to the side of the vehicle body and is also transmitted to the side rail 6, whereby the impact load so transmitted is dispersed from the side rail 6, and the first roof brace 26 and the second roof brace 27 to the upper part of the vehicle body. In addition, the impact load which is partially inputted from the rear side frame 3 to the C pillar 11 is dispersed from the C pillar to the side of the vehicle body, as well as being transmitted to the side rail 5 to thereby be dispersed over the entirety of the upper part of the vehicle body from the side rail 5, and the first roof brace 26 and the second roof brace 27.

Consequently, the impact load P2 is dispersed and transmitted from the side frames 3, 4 and the first and second cross members 21, 22 to the entirety of the lower part of the vehicle body, from the C pillars 11, 12 and the D pillars 13, 14 to the entirety of the side of the vehicle body at the rear thereof, or from the left and right side rails 5, 6 and the first roof brace 26 and the second roof brace 27 to the entirety of the upper part of the vehicle body, whereby the impact load P2 is dispersed efficiently over the entirety of the vehicle body to thereby be absorbed therein.

In the event that an impact load P3 is inputted from the side of the vehicle body to the vicinity of the D pillar 13, the impact load so inputted is dispersed over a wide range of the lower part of the vehicle body from the front to rear thereof by the rear side frame 3 and is transmitted mainly to the rear end 22b of the second cross member 22 and the lower end 13a of the D pillar 13 via the rear side frame 3.

Here, the impact load which is inputted to the rear end 22b of the second cross member 22 is transmitted from the front end 22a via the second cross member 22 to the other rear side frame 4 in the vicinity of the lower end 12a of the C pillar 12, and part of the impact load so transmitted is dispersed from the crossing portion 23 to the rear portion range 21B of the first cross member 21, and is then transmitted from the rear portion 21b to the rear side frame 4 in the vicinity of the lower end 14a of the D pillar 14 to thereby be dispersed and transmitted over the wide range of the rear side frame, whereby the impact load so transmitted is dispersed from the rear side frame 4 to the entirety of the lower part of the vehicle body. In addition, the part of the impact load is dispersed from the rear side frame 4 to the C pillar 12 and the D pillar 14 to be dispersed and transmitted to the entirety of the side of the vehicle body at the rear thereof, as well as being transmitted to the side rail 6 to thereby be dispersed from the side rail 6, and the first roof brace 26 and the second roof brace 27 to the entirety of the upper part of the vehicle body. In addition, the load which is dispersed and transmitted from the rear side frame 4 to the lower end 13a of the D pillar 13 is dispersed from the D pillar 13 to the side of the vehicle body, as well as being transmitted to the side rail 6 to thereby be dispersed from the side rail 6, and the second roof brace 27 and the first roof brace 26 to the entirety of the upper part of the vehicle body.

Consequently, the impact load P3 is dispersed and transmitted to the entirety of the lower part of the vehicle body from the rear side frame 3, the first and second cross members 21, 22, and the rear side frame 4, to the entirety of the side of the vehicle body at the rear thereof from the D pillar 13 and further to the upper part of the vehicle body from the side rails 5, 6 and the first and second roof braces 26, 27, whereby the impact load P3 is dispersed to the entirety of the vehicle body so as to be absorbed efficiently therein.

In the event that an impact load P4 is inputted from the rear to a transversely central portion or the whole side of a rear end of the vehicle body, the impact load P4 is dispersed and transmitted to the respective rear ends 3a, 4a of the left and right rear side frames 3 and 4 by the rear skirt 16 and the bumper beam. This dispersion and transmission of the impact load to the rear side frames 3 and 4 is efficiently implemented by preventing the so-called opening of the frame in which the respective rear ends 3a and 4a are separated apart from each other through the connection of the rear ends 3a and 4a of the both rear side frames 3, 4 by means of the rear skirt 16 and the bumper beam.

The impact load inputted to the rear end 3a of the rear side frame 3 is dispersed and transmitted from the rear side frame to the side sill 1 to which the front portion of the rear side frame 3 is connected and the rear end 22b of the second cross member 22 and is then transmitted from the second cross member 22 to the rear side frame 4 in the vicinity of the lower end 12a of the C pillar 12 to thereby be dispersed to the entirety of the lower part of the vehicle body. In addition, a part of the load inputted to the rear end 3a of the rear side frame 3 is dispersed to the side of the vehicle body at the rear thereof via the D pillar 13 and is transmitted to the side rail 5 to thereby be dispersed from the side rail 5, and the first roof brace 26 and the second roof brace 27 to the entirety of the upper part of the vehicle body for a dispersion over the entirety of the vehicle body.

In addition, the impact load inputted to the rear end 4a of the rear side frame 4 is dispersed and transmitted from the rear side frame 4 to the side sill 1 and the rear end 21b of the first cross member 21, and part thereof is dispersed from the first cross member to the rear side member 3 in the vicinity of the lower end 11a of the C pillar 11 for dispersion over the entirety of the lower part of the vehicle body. In addition, the part of the load inputted to the rear end 4a of the rear side frame 4 is dispersed via the D pillar 14 to the side of the vehicle body, as well as being transmitted to the side rail 6 to thereby be dispersed and transmitted from the side rail 6, the first roof brace 26, the second roof brace 27 and the side rail 5 to the entirety of the upper part of the vehicle body for the dispersion over the entirety of the vehicle body.

In the event that an offset impact load which is deflected to one of transverse sides is inputted from the rear, or, for example, as shown in Fig. 2, in the event that an impact load P5 which is deflected to the rear side frame 3, the load is inputted mainly to a rear end 3a of the rear side frame 3, and part of the impact load P5 is dispersed and transmitted to a rear end 4a of the other rear side frame 4 via the rear skirt 16 and the bumper beam.

The impact load inputted to the rear end 3a of the rear side frame 3 is dispersed and transmitted from the rear side frame 3 to the side sill 1 to which the front portion of the rear side frame 3 is connected and the rear end 22b of the second cross member 22, and is then transmitted from the second cross member 22 to the rear side member 4 in the vicinity of the lower end 12a of the C pillar 12 for dispersion over the entirety of the lower part of the vehicle body. In addition, part of the load inputted to the rear end 3a of the rear side frame 3 is dispersed from the D pillar 13 to the entirety of the side of the vehicle body at the rear thereof, as well as being transmitted to the side rail 5 to thereby be dispersed and transmitted from the side rail 5, the first roof brace 26, the second roof brace 27 and the side rail 6 to the entirety of the upper part of the vehicle body for the dispersion over the entirety of the vehicle body.

On the other hand, the impact load inputted to the rear end 4a of the rear side frame 4 is dispersed and transmitted from the rear side frame 4 to the side sill 2 and the rear end 21b of the first cross member 21, and is then transmitted from the first cross member 21 to the rear side frame 3 in the vicinity of the lower end 11a of the C pillar 11 for the dispersion over the entirety of the lower part of the vehicle body. In addition, part of the load inputted to the rear end 4a of the rear side frame 4 is dispersed from the D pillar 14 to the side of the vehicle body at the rear thereof, as well as being transmitted to the side sill 6 to thereby be dispersed and transmitted from the side rail 6, the first roof brace 26, the second roof brace 27 and the side sill 5 to the entirety of the upper part of the vehicle body for the dispersion over the entirety of the vehicle body.

Consequently, according to the embodiment of the present invention, the rigidity at the upper and lower parts of the vehicle body can be improved by disposing the substantially X-shaped cross member as viewed from the top which includes the first cross member 21 and the second cross member 22 which each looks like a brace between the left and right rear side frames 3, 4 in such a manner that the front portions 21a, 22a thereof connect, respectively, to the rear side frames 3 and 4 in the vicinity of the respective lower ends 11a, 12a of the C pillars 11, 12 and the rear portions 21b, 22b thereof connect, respectively, to the rear side frames 3, 4 in the vicinity of the respective lower ends 13a, 14a of the D pillars 13, 14, and disposing the substantially X-shaped roof brace 25 as viewed from the top which includes the first roof brace 26 and the second roof brace 27 between the left and right side rails 5 and 6 in such a manner that the front portions 26a, 27a thereof connect, respectively, to the side rails 5, 6 in the vicinity of the respective upper ends 11b, 12b of the C pillars 11, 12 and the rear portions 26b, 27b thereof connect, respectively, to the side rails 5, 6 in the vicinity of the respective upper ends 13b, 14b of the D pillars 13, 14, and moreover, the lower and upper parts of the vehicle body where those rigidities are so secured are associated with and connected to each other by the C pillars 11, 12 and the D pillars 13, 14 to thereby improve remarkably the rigidity at the rear of the vehicle body, whereby the rigidity of the entirety of the vehicle body can be secured, thereby the controllability and running stability of the vehicle being improved. In addition, even in the event that the impact loads are inputted from the side and rear of the vehicle body, the impact loads can be dispersed efficiently over the entirety of the vehicle body, thereby making it possible to secure the safety of occupants.

Note that the present invention is not limited to the embodiment that has been described heretofore but maybe modified variously without departing from the spirit and scope thereof. For example, while, in the embodiment, the substantially X-shaped cross member 20 attained by crossing the first cross member 21 and the second cross member 22 which are linear is disposed between the left and right rear side frames in such a manner that the front portions 21a, 22a connect, respectively, to the rear side frames 3 and 4 in the vicinity of the C pillars 11, 12 and that the rear portions 21b, 22b connect, respectively, to the rear side frames 3 and 4 in the vicinity of the D pillars 13, 14, in the event that the configuration of the cross member 20 is restricted by a fuel tank disposed on an underside of the floor panel, as shown in Fig. 4 showing a plan view correspond to Fig. 2 which illustrates the lower part of the vehicle body, it is possible to interpose a connecting portion 24 which extends transversely between a rear end of the front portion range 21A of the first cross member 21 and a front end of the rear portion range 22B of the second cross member 22 and the front end of the rear portion range 21B of the first cross member 21 and a rear end of the front portion range 22A of the second cross member 22. In this case, too, the substantially X-shaped cross member 20 as viewed from the top which has substantially the same function can be provided. In addition, similarly, in the roof brace 25, too, a substantially X-shaped roof brace 25 can be formed by interposing a connecting portion which extends transversely between a rear end of the front portion range of the first roof brace 26 and a front end of the rear portion range of the second roof brace 27 and a front end of the rear portion range of the first roof brace 26 and a rear end of the front portion range of the second roof brace 27.

According to the rear vehicle body structure that has been described heretofore, the rigidity at the lower part of the vehicle body can be obtained by providing the substantially X-shaped cross member as viewed from the top which includes the first cross member and the second cross member which each looks like the brace and which cross each other so as to connect, respectively, to the left and right rear side frames, and the connecting rigidity is secured between the lower part of the vehicle body where the rigidity is so obtained and the C pillars or the D pillars, whereby the body rigidity can be improved largely. Furthermore, even in the event that the impact load is applied from the side or rear of the vehicle body, the impact load can be dispersed and transmitted via the left and rear side frames and the cross member to the entirety of the lower part of the vehicle body, and the impact load is also dispersed and transmitted to the side and upper part of the vehicle body from the C pillars or the D pillars which are connected to the lower part of the vehicle body with the connecting rigidity, thereby making it possible to disperse efficiently the impact load over the entirety of the vehicle body.

In addition, the rigidity at the upper part of the vehicle body can be obtained by providing the substantially X-shaped roof brace as viewed from the top which includes the first roof brace and the second roof brace which each looks like the brace and which cross each other so as to connect, respectively, to the left and right side rails, and the connecting rigidity is secured between the upper part of the vehicle body where the rigidity is so obtained and the C pillars or the D pillars, whereby the body rigidity can be improved largely. Furthermore, even in the event that the impact load is applied from the side or rear of the vehicle body, the impact load can be dispersed efficiently from the lower part of the vehicle body via C pillars or the D pillars to the wide range over the upper part of the vehicle body.

The disclosure of Japanese Patent Application No. 2002-309403 filed on October 24, 2002 including the specification, drawings and abstract is incorporated herein by reference in its entirety.

While the presently preferred embodiments of the present invention have been shown and described, it is to be understood that these disclosures are for the purpose of illustration and that various changes and modifications may be made without departing from the scope of the present invention as set forth in the appended claims.

## Claims

1. A rear vehicle body structure, comprising:
left and right rear side frames extending longitudinally;
left and right C and D pillars extending substantially vertically;
a first cross member connecting at a front end thereof to one of the rear side frames in the vicinity of one of the C pillars and connecting at a rear end thereof to the other rear side frame; and
a second cross member connecting at the front end thereof to the other rear side frame in the vicinity of the other C pillar and connecting at the rear end thereof to the one of the rear side frame.

2. The rear vehicle body structure as set forth in Claim 1, wherein
the rear end of the second cross member connects to the one of the rear side frames in the vicinity of one of the D pillars, and
the rear end of the first cross member connects to the other rear side frame in the vicinity of the other D pillar.

3. A rear vehicle body structure comprising:
left and right rear side frames extending longitudinally;
left and right C and D pillars extending substantially vertically;
a first cross member connecting at a front end thereof to one of the rear side frames and connecting at a rear end thereof to the other rear side frame in the vicinity of the D pillar; and
a second cross member connecting at a front end thereof to the other rear side frame and connecting at the rear end thereof to the one of the rear side frame in the vicinity of the D pillar.

4. A rear vehicle body structure comprising:
left and right side rails extending longitudinally;
left and right C and D pillars extending substantially vertically;
a roof brace provided to span between the left and right side rails, and to be a substantially X-shaped roof brace;
a first roof brace connecting at a front end thereof to one of the side rails in the vicinity of one of the C pillars; and
a second roof brace connecting at the front end thereof to the other side rail in the vicinity of the other C pillar and crossing the first roof brace and connecting at the rear end thereof to the one of the side rails.

5. The rear vehicle body structure as set forth in Claim 4, wherein
the rear end of the second roof brace connects to the one of the side rails in the vicinity of one of the D pillars, and
the rear end of the first roof brace connects to the other side rail in the vicinity of the other D pillar.

6. A rear vehicle body structure, comprising;
left and right side rails extending longitudinally;
left and right C and D pillars extending substantially vertically;
a roof brace provided to span between the left and right side rails and to be a substantially X-shaped roof brace;
a first roof brace connecting at a front end thereof to one of the side rails connecting at the rear end thereof to the other side rail in the vicinity of the D pillar; and
a second roof brace connecting at the front end thereof to the other side rail and connecting at the rear end thereof to the one of the side rails in the vicinity of the D pillar.

7. The rear vehicle body structure as set forth in Claim 1, further comprising:
a substantially X-shaped roof brace;
a first roof brace connecting at a front end to one of the side rails in the vicinity of one of the C pillars and connecting at the rear end thereof to the other side rail; and
a second roof brace connecting at the front end thereof to the other side rail in the vicinity of the other C pillar and connecting at the rear end thereof to the one of the side rails.

8. The rear vehicle body structure as set forth in Claim 3, further comprising:
a substantially X-shaped roof brace;
a first roof brace connecting at the front end thereof to one of the side rails and connecting at a rear end thereof to the other side rail in the vicinity of the D pillar; and
a second roof brace connecting at a front end thereof to the other side rail and connecting at the rear end thereof to the one of the side rails in the vicinity of the D pillar.

9. The rear vehicle body structure as set forth in Claim 2, further comprising:
a substantially X-shaped roof brace;
a first roof brace connecting at a front end thereof to one of the side rails in the vicinity of one of the C pillars and connecting at the rear end thereof to the other side rail in the vicinity of the D pillar; and
a second roof brace connecting at the front end thereof to the other side rail and connecting at the rear end thereof to the one of the side rails in the vicinity of the D pillar.

10. A rear vehicle body structure comprising:
left and right rear side frames extending longitudinally;
a first cross member connecting at a front end thereof to one of the rear side frames and connecting at a rear end thereof to the other rear side frame; and
a second cross member connecting at a front end thereof to the other rear side frame and connecting at a rear end thereof to the one of the rear side frame.

11. A rear vehicle body structure comprising:
left and right side rails extending longitudinally;
a first roof brace connecting at a front end thereof to one of the side rails and connecting at a rear end thereof to the other side rail; and
a second roof brace connecting at a front end thereof to the other side rail and connecting at a rear end thereof to the one of the side rails.
